# EUROPEAN PATENT APPLICATION

(11) **EP 1 393 630 A1**
(43) Date of publication of application: **03.03.2004**
(21) Application number: 03380191.1
(22) Date of filing: 11.08.2003
(51) Int. Cl.: A21C 3/06

(54) **Device for rolling up doughs in sheet form**

(30) Priority: 26.08.2002 ES 200201976
(71) Applicant: Lozano Soriano, Angel, 08031 Barcelona (ES)
(72) Inventor: Lozano Soriano, Angel, 08031 Barcelona (ES)
(74) Representative: Duran Moya, Luis-Alfonso

(57) **Abstract**

The device comprises a rotary drum (3) arranged a predetermined height above a conveyor belt (1) for transporting pieces (11) of dough in sheet form; the rotary drum (3) carries a plurality of rollers (5,6,7,8) which are parallel to its axle (9) and are mounted peripherally on the drum (3); the peripheral rollers (5,6,7,8) are rotated in the opposite direction to the drum (3) and, during the rotation of the drum, can be arranged substantially touching the conveyor belt (1) in order to bring about progressive rolling-up of the pieces (11) of dough in sheet form.

## Description

The present invention is intended to disclose a novel device for rolling up doughs in sheet form, which affords considerable characteristics of novelty and inventive step over the prior art.

The device of the present invention is intended particularly for rolling up doughs in sheet form for the preparation of articles such as so-called "croissants" and the like.

The object of the device of the present invention is to facilitate the mechanized rolling-up of pieces of dough in sheet form for the production of the said food articles, achieving reliable rolling-up, without failures, of the various pieces of dough in sheet form that are supplied successively to the device.

Another object of the present invention is to arrange for the device for the automatic rolling-up of pieces of dough in sheet form to have very simple mechanical characteristics so as to achieve a much lower production cost and, at the same time, greater functional reliability.

In order to achieve its objects, the device of the present invention comprises, basically, a head which is rotatable above a conveyor belt for transporting the portions of dough of sheet-like structure, which head has a plurality of rollers which are also rotatable about their own axes and are arranged in a manner such that, during the rotation of the drum of the device, the said rollers establish tangential contact with the belt transporting the pieces in sheet form so that the said pieces of dough in sheet form are subjected to the dual effect, on the one hand, of the linear displacement of the conveyor belt and, on the other hand, of the rotary movement of the corresponding roller rotating about its axis, in the opposite direction to the displacement of the conveyor belt. The device effectively rolls up the piece of dough in sheet form so that, as the belt advances simultaneously with the rotation of the drum, the rolled piece of dough can be translated without any difficulty or interference by the combination of the said movements of translation of the belt and of rotation of the drum, which take place in the same direction.

The construction of the rotary drum may be variable and, in a preferred embodiment, comprises two end pieces in the form of discs or plates which are coupled with a central bar that is the rotation axle, and which carry the various rollers, mounted peripherally; a system is provided for rotating the rollers and may consist, in one example, simply of a ring fixed firmly to the drum axle and respective pinions fixed firmly to each roller axle. The drum axle may be driven by means of motor units with reduction gears, for example, one motor unit at one end, or two motor units, one at each end of the axle of the said drum.

For a better understanding of the present invention, some drawings showing a preferred embodiment thereof are appended by way of non-limiting example.

Figures 1 to 5 are respective schematic views which show a complete cycle for the rolling-up of a piece of dough in sheet form in accordance with the invention.

Figure 6 is a schematic view of the arrangement of kinematic elements of the device.

Figure 7 is a schematic, perspective view of the mechanical elements of the device of the invention.

As shown in the drawings, the device of the present invention comprises, basically, an endless belt conveyor 1 which moves in the direction of the arrow 2 and a rotary drum 3 which moves in the direction of the arrow 4, that is, in the same direction as the belt 1 in the portion directly facing the belt. The drum 3 is arranged a predetermined height above the belt 1 so that a plurality of rollers such as those indicated by the numerals 5, 6, 7 and 8 can be mounted on the drum 3 with axles parallel to the axle 9 of the drum itself and with a rotary movement in the opposite direction to that of the drum, in accordance with the rotation arrows indicated, for example, the arrow 10 corresponding to the roller 7.

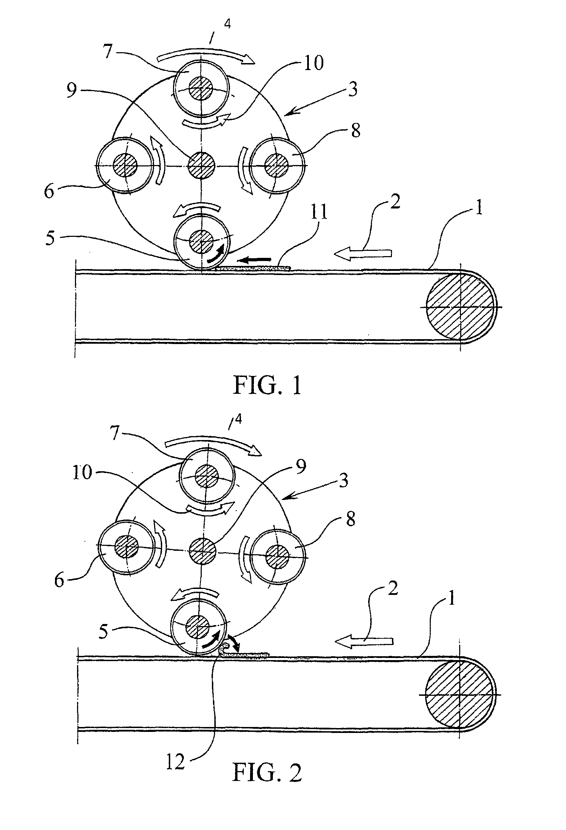

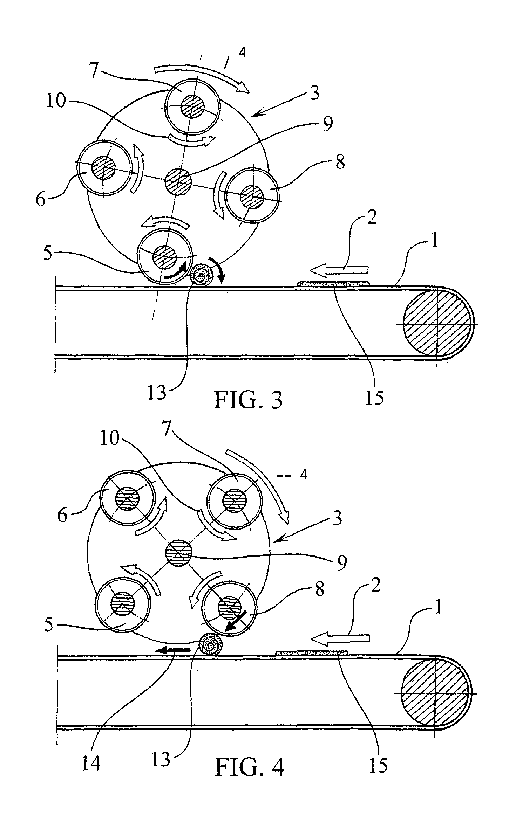

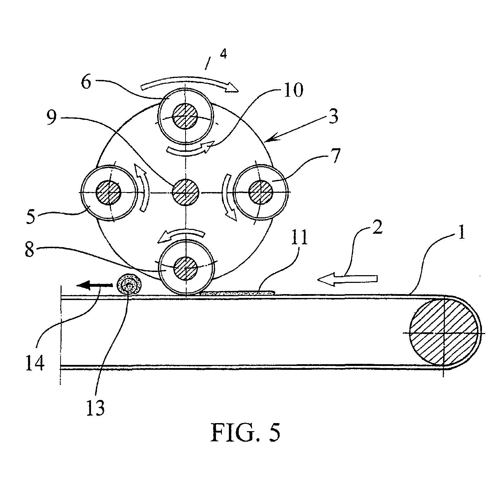

The minimum height between the rotation axles of the rollers and the belt 1 is such that the periphery of the roller reaches a situation in which it is practically touching the surface of the belt 1 in the position in which the two elements shown in Figure 1 face one another. In these conditions, the conveyor belt 1 which carries pieces 11 of dough of sheet-like structure transports the said pieces until contact is established with the surface of the corresponding roller; Figure 2 shows the formation of a first rolling region 12 which advances until the dough 13 is completely rolled up as shown in Figure 3; the dough is then dragged along by the conveyor belt 1 and partially by the following roller, giving rise to a displacement indicated by the arrow 14 in Figure 4 so that the rolled piece 13 is transported beyond the drum 3, the cycle ends, and a new piece of dough 15 in sheet form enters, Figure 5, in order to start a new rolling cycle.

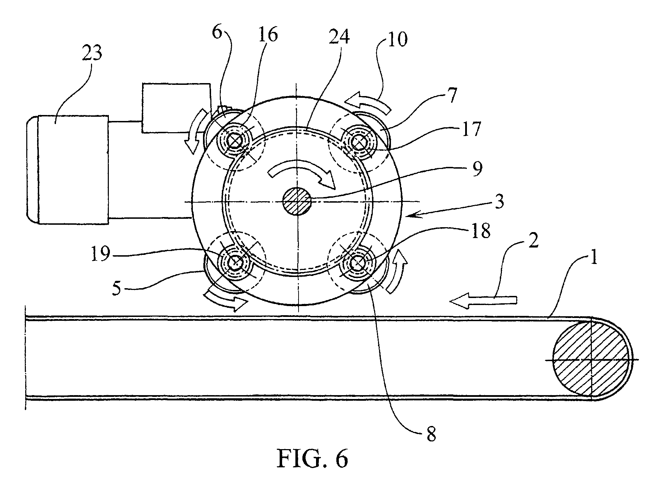

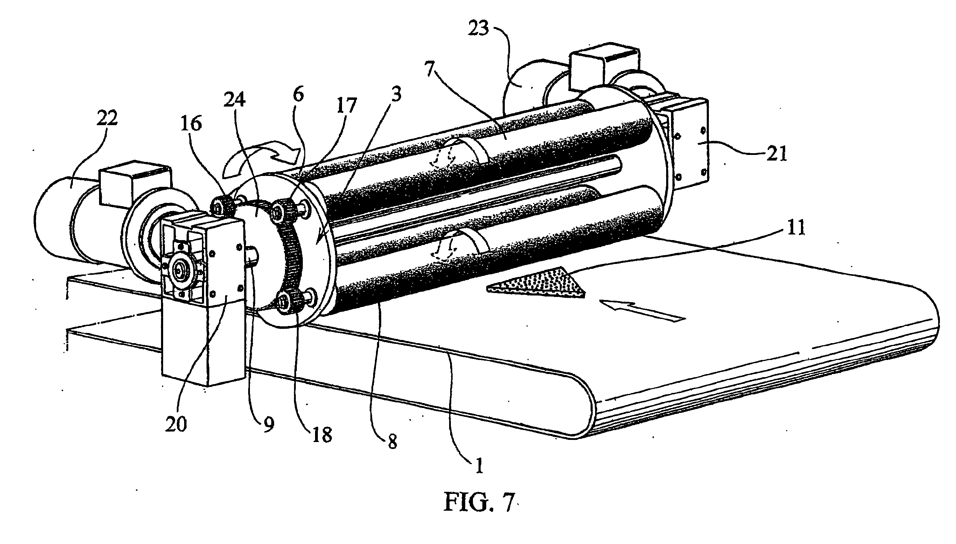

The drums may be driven by a plurality of separate means; Figures 6 and 7 show an arrangement which comprises the mounting of a ring gear 24 on the drum axle 9 and respective pinions 16, 17, 18 and 19 on the roller axles. This arrangement of elements can also be seen in Figure 7 which shows the mounting of the rotary drum by means of end supports 20 and 21 carrying corresponding bearings; motor drive units 22 and 23 with speed reducers can also be seen.

By virtue of this arrangement of elements, the device of the present invention can roll up pieces of dough in sheet form quickly and effectively and the construction of the assembly is also very simple.

## Claims

1. A device for rolling up doughs in sheet form, **characterized in that** it comprises a rotary drum arranged a predetermined height above a conveyor belt for transporting pieces of dough in sheet form, the rotary drum carrying a plurality of rollers which are parallel to the axle of the drum and are mounted peripherally on the drum, the drum being rotatable by the effect of mechanical rotation means in a manner such that, in the facing portion between the drum and the conveyor belt, the direction of movement is the same, the peripheral rollers being rotated in the opposite direction to the drum and being able, during the rotation of the drum, to be arranged substantially touching the conveyor belt in order to bring about progressive rolling-up of the pieces of dough in sheet form which reach the point of contact, transported by the conveyor belt.

2. A device for rolling up doughs in sheet form according to Claim 1, **characterized in that** the axles of the rollers that are mounted on the rotary drum are rotated by the meshing of respective pinions mounted on the axles of the said rollers with a ring gear coupled with the drum axle which is driven by an independent geared drive device.
